(19) Europäisches Patentamt
European Patent Office
Office européen des brevets

(11) **EP 4 189 355 B1**

(12) **EUROPEAN PATENT SPECIFICATION**

(45) Date of publication and mention
of the grant of the patent:
**30.04.2025  Bulletin 2025/18**

(21) Application number: **21746101.1**

(22) Date of filing: **07.07.2021**

(51) International Patent Classification (IPC):
*G01M 13/005* (2019.01)    *G01H 1/00* (2006.01)
*G01N 29/14* (2006.01)    *G01N 29/44* (2006.01)

(52) Cooperative Patent Classification (CPC):
**G01M 13/005; G01H 1/003; G01N 29/14;
G01N 29/4463;** G01N 2291/0258; G01N 2291/2696

(86) International application number:
**PCT/GB2021/051738**

(87) International publication number:
**WO 2022/029402 (10.02.2022 Gazette 2022/06)**

(54) **APPARATUS AND METHOD**

VORRICHTUNG UND VERFAHREN

APPAREIL ET PROCÉDÉ

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority:  **03.08.2020  GB 202012055**

(43) Date of publication of application:
**07.06.2023  Bulletin 2023/23**

(73) Proprietor: **John Crane UK Ltd.
Slough, Berkshire SL1 4LU (GB)**

(72) Inventors:
 • **MECK, Klaus
   Slough Berkshire SL1 4LU (GB)**
 • **NASHED, Mohamad Shadi
   Slough Berkshire SL1 4LU (GB)**

(74) Representative: **Leach, Sean Adam et al
Mathys & Squire
The Shard
32 London Bridge Street
London SE1 9SG (GB)**

(56) References cited:
**EP-A2- 1 348 296        EP-B1- 1 348 296
DE-A1- 102016 205 454    US-A1- 2010 106 429
US-A1- 2020 141 907**

## Description

### Technical Field

The present disclosure relates to the field of seals for rotating equipment.

### Background

Seals for rotating equipment comprise seal components which experience wear throughout the lifetime of the seal assembly. When a seal component fails harmful fluids may leak to the environment and may have negative health consequences for humans and ecology.

US2020141907 describes a predictive diagnostics system for monitoring mechanical seals. The system autonomously detects a loss of lubrication within a sliding seal interface of a mechanical seal.

US2010106429 describes a mechanical seal monitoring system and method that measure the wear of seal faces of a mechanical seal where the mechanical seal seals a rotating machine portion from another portion of the machine.

DE 102016205454 describes a method for determining and/or predicting the operational state of at least one inflow valve, via which steam from a steam generator is supplied to a steam turbine.

### Summary

Aspects of the disclosure are set out in the independent claims and optional features are set out in the dependent claims. Aspects of the disclosure may be provided in conjunction with each other, and features of one aspect may be applied to other aspects.

In an aspect of the disclosure there is provided computer implemented method of determining when to replace a seal component of a seal assembly, the method comprising: obtaining an indication of an accumulation of acoustic emission energy emitted from the seal component over a period of time; determining an estimate of remaining lifetime of the seal component based on the indication.

For example, the step of obtaining an indication of an accumulation of acoustic emission energy emitted from the seal component over a period of time may comprise obtaining an indication of a sum of acoustic emission energy emitted from the seal component over a period of time e.g. the accumulation may comprise a sum.

During operation of rotating equipment to which the seal assembly is mounted, the seal component of seal assemblies which are in contact with other components of the seal assembly. Seal component rotate relative the other components of the seal assembly. In examples, this relative rotational motion may cause the seal component to wear (e.g. due to frictional forces). For example, seal components may comprise any of a primary ring and a mating ring. For example, a mechanical seal may comprise: the primary ring, mating ring and a seal fluid. The seal fluid may be disposed in any of the following locations: in contact with the primary ring; in contact with the mating ring; between the primary ring and the mating ring.

In examples, an inboard mechanical seal may comprise: an inboard primary ring, an inboard mating ring and a seal fluid such as a process fluid or a flush fluid. In examples, an outboard mechanical seal may comprise: an outboard primary ring, an outboard mating ring and a seal fluid such as a barrier fluid or a buffer fluid.

The estimate of remaining lifetime may be used by an operator of the rotating equipment in order to cease operation of the rotating equipment when the rotating equipment has operated for a time period less than or equal to the estimate of remaining lifetime of the seal component. Therefore, operation of the rotating equipment may be ceased before the seal component of the seal assembly has been worn to a deteriorated state. In the deteriorated state the seal assembly may no longer provide a sufficient seal. In the deteriorated state the seal component of the seal assembly may cause excessive wear and/or damage to adjacent components of the seal assembly. Advantageously, the negative consequences of operating rotating equipment with a seal assembly comprising a seal component in a deteriorated state may be avoided.

The estimate of remaining lifetime may refer to the remaining duration of time which the rotating equipment may be operated before the seal component is worn to a deteriorated state. For example, if a seal component of a seal assembly has an estimated remaining lifetime of 2 years and the rotating equipment is operated continuously for a period of 1 year and then the rotating equipment is not operated for a continuous period of 1 year, the estimated remaining lifetime of the seal component is 1 year.

In examples, the method may be used to determine an estimate of remaining lifetime of more than one seal component based on the indication e.g. a set of components such as a primary ring and a mating ring. In such examples, of the more than one seal component for which an estimate of remaining lifetime has been determined, the seal component with the shortest estimate of remaining lifetime may be of most interest because failure of this component may necessarily lead to a failure of the rotating equipment.

The determining an estimate of remaining lifetime of the seal component may be further based on baseline acoustic emission energy data. For example, the baseline acoustic emission energy, $E_b$, may be an expected total acoustic emission energy to be emitted by the seal component over the expected lifetime of the seal component, $T_b$. For example, the expected lifetime of the seal component may be five years (e.g. five years of continuous use of the seal component). The baseline acoustic emission energy, $E_b$, may be determined using a condition monitoring system. For example, the condition monitoring system may be configured to determine a baseline acoustic emission energy.

The baseline acoustic emission energy, $E_b$, may be defined as the product of a baseline acoustic emission indication, $AE_{base}$, and an expected lifetime of the seal component, $T_b$. This may be expressed mathematically as:

$$E_b = AE_{base}.T_b$$

The condition monitoring system may be configured to determine a baseline acoustic emission energy, $E_b$. The condition monitoring system may be configured to determine a baseline acoustic emission indication, $AE_{base}$. The condition monitoring system may be configured to determine any of: a baseline acoustic emission energy, $E_b$; a baseline acoustic emission indication, $AE_{base}$; based on one or more parameters of the seal assembly.

The condition monitoring system may be configured to monitor performance indicator parameters in a seal to determine an operating condition of the seal.

The performance indicator parameters may include any of: temperature; and, magnitude of acoustic emission (e.g. an indication of the acoustic emission energy as described herein).

The performance indicator parameters may include the change with respect to time of any of: temperature; and, magnitude of acoustic emission (e.g. an indication of the acoustic emission energy as described herein). For example, the change of the parameters may be obtained over a set period of time (e.g. 1 second).

The performance indicator parameters may be obtained by any suitable sensor.

The condition monitoring system may comprise a "baselining algorithm". The baselining algorithm may assess the condition of the seal assembly (e.g. the seal components) against the expected performance of a "digital twin". The digital twin may be a computer program (e.g. software such as SSelect). The digital twin may simulate the seal assembly and a supporting seal system. The digital twin may simulate the seal assembly and a supporting seal system based on the specific application conditions of the seal assembly (e.g. process and pump parameters). Process and pump parameters may be obtained by sensors, for example, sensors installed on the pump. The process and pump parameters may be obtained from a user input (e.g. a user may input the data, for example, in instances wherein sensor data is not available. The process and pump parameters may be in addition to the performance indicator parameters obtained by the condition monitoring system.

The condition monitoring system may be configured to determine one or more selected threshold performance indicator parameters.

The one or more selected threshold performance indicator parameters may constitute a "baseline" operating conditions of the seal assembly. In examples, a selected threshold performance indicator parameter may be a baseline acoustic emission indication, $AE_{base}$. In examples, a selected threshold performance indicator parameter may be a baseline acoustic emission energy, $E_b$. The baseline acoustic emission energy, $E_b$, may be based on the baseline acoustic emission indication, $AE_{base}$.

It is noted above that the condition monitoring system may be configured to determine a baseline acoustic emission indication, $AE_{base}$. This is optional, for example, the baseline may be stored in a memory of the device. For example, it may be programmed or hard-coded perhaps having been determined by an auxiliary system (e.g. a system other than the condition monitoring system).

The indication may be a time dependent function, $V=V(t)$. The indication, $V$, may be squared to provide a squared indication, $V^2$. The squared indication, $V^2$, may be integrated with respect to time over the period of time, $T_i$ to obtain a total acoustic emission energy emitted from the source of acoustic emission energy over the period of time, $T_i$. This may be expressed mathematically as:

$$E_{T_i} = \int_0^{T_i} V^2(t)dt$$

The total acoustic emission energy over the period of time, $E_{Ti}$, may be proportional to the total wear of the seal component $W_{Ti}$ over the period of time, $T_i$. This may expressed mathematically as:

$$E_{T_i} = k_{E-W} W_{T_i}$$

Where, $k_{E-W}$, is a constant of proportionality.

The wear of the seal component $W_{T_i}$ over the period of time, $T_i$, may be proportional to the seal area of the seal component, A (e.g. surface area of the seal component which opposes neighbouring components of the seal assembly). This may be expressed mathematically as:

$$W_{T_i} = k_{W-A} A$$

Where, $k_{W-A}$, is a constant of proportionality.

For example, the period of time, $T_i$, may be referred to as a "snap" of time. A snap of time may be approximately 1 second in length. The total acoustic emission energy, $E_{T_i}$, emitted over the period of time, $T_i$, may generally be referred to as a snap of acoustic emission energy. More specifically, the total acoustic emission energy $E_{T_i}$ emitted over the period of time, $T_i$, may generally be referred to as the *"i-th"* snap of acoustic emission energy e.g. the total acoustic emission energy $E_{T_7}$ emitted over the period of time, $T_7$, may generally be referred to as the *"7-th"* snap of acoustic emission energy.

A deterioration time, $T_d$, may be equal to sum of the snaps of time which elapse sequentially. For example, a deterioration time, $T_d$, total amount of time elapsed from the start of a first snap of time $T_1$ the end of an M-th snap of time $T_M$ (e.g. where M is an integer). This may be expressed mathematically as:

$$T_d = \sum_{i}^{M} T_i$$

A deterioration energy, $E_d$, may be defined as the total acoustic emission energy emitted over the deterioration time, $T_d$. For example, the deterioration energy, Ed, may be defined as the sum of M snaps of acoustic emission energy, $E_{T_i}$. This may be expressed mathematically as:

$$E_d = E_{T_1} + E_{T_2} + \cdots + E_{T_M} = \sum_{i}^{M} E_{T_i} = \sum_{i}^{M} \int_{0}^{T_i} V^2(t) dt$$

$$E_d = \int_{0}^{T_1} V^2(t) dt + \int_{0}^{T_2} V^2(t) dt + \cdots + \int_{0}^{T_M} V^2(t) dt$$

Advantageously, summing a plurality of snaps of acoustic emission energy may reduce the amount of processing power required to integrate the indication of acoustic emission energy. For example, the load on a device configured to perform the integration (e.g. a computer; e.g. an analogue integrator) may be reduced.

Advantageously, summing a plurality of snaps of acoustic emission energy may reduce the processing bandwidth required to process the indication.

Advantageously, taking a plurality of snaps of acoustic emission energy and then summing the plurality of snaps may reduce the integration drift.

The deterioration energy, $E_d$, may be compared to a baseline acoustic emission energy, $E_b$.

The deterioration energy $E_d$, may be proportional to the deterioration wear, $W_d$, of the seal component over the deterioration time, $T_d$. This may expressed mathematically as:

$$E_d = K_{E-W} W_d$$

Where, $K_{E-W}$, is a constant of proportionality.

Deterioration wear of the seal component, $W_T$, during the total amount of time elapsed may be proportional to the seal area of the seal component, A (e.g. surface area of the seal component which opposes neighbouring components of the seal assembly). This may be expressed mathematically as:

$$W_d = K_{W-A} A$$

Where, $K_{W-A}$, is a constant of proportionality.

The estimated remaining acoustic emission energy, $E_u$, may be defined as the estimated acoustic emission energy to be emitted by the seal assembly during the estimated remaining lifetime, $T_u$. The estimated remaining acoustic emission energy, $E_u$, may be equal to the product of the baseline acoustic emission indication, $AE_{base}$, and the estimated remaining lifetime, $T_u$. This may be expressed mathematically as:

$$E_u = AE_{base}.T_u$$

The estimated remaining acoustic emission energy, $E_u$, may be equal to the difference between the baseline acoustic emission energy, $E_b$, and the deterioration energy, $E_d$. This may be expressed mathematically as:

$$E_u = E_b - E_d$$

This relationship may be alternatively expressed as:

$$E_b \left(1 - \frac{E_d}{E_b}\right) = E_u$$

This mathematical relationship can be rewritten as a relationship between: the total lifetime of the seal assembly, $T_b$; the baseline acoustic emission energy, $E_b$; the deterioration energy, $E_d$; and, the estimated remaining lifetime, $T_u$. The relationship may be expressed mathematically as:

$$T_b.(1 - \frac{E_d}{E_b}) = T_u$$

By using the relationships between:

- Baseline acoustic emission energy, $E_b$; baseline acoustic emission indication, $AE_{base}$; and, expected lifetime of the seal component, $T_b$:

  ○

$$E_b = AE_{base}.T_b$$

- Estimated remaining acoustic emission energy, $E_u$; baseline acoustic emission indication, $AE_{base}$; and, the estimated remaining lifetime, $T_u$:

  ○

$$E_u = AE_{base}.T_u$$

Severity of contact between seal faces may depend on the seal fluid used in the seal assembly. For example, the severity of contact between seal faces may be higher when carbon dioxide is used as a seal fluid in comparison to the when light oil is used as a seal fluid. The greater the severity of contact between seal faces the greater the wear condition of the seal component per unit time. In other words AE energy is directly related to wear condition.

The term "wear condition" may refer to the relationship between wear of the component and the deterioration AE energy. For example, different wear conditions may exist due to a number of factors.

In examples, an acoustic emission baseline indication, $AE_{base}$, and/or an acoustic emission baseline energy, $E_b$, for a specific seal assembly and specific application conditions (e.g. the type of seal fluid) may be used as a reference of the level of severity of wear that will give a determined minimum seal lifetime.

The seal may experience transient changes to the wear condition. Transient changes to the wear condition may be caused by any of: a change in pump speed; a change in pressure of the seal fluid; short term dry running due to vapours in the pumped liquid; and, changes to the secondary components (O-ring, drive pins), for example, increased friction to the axial gap adjustment. If the seal experiences transient changes to the wear condition the severity of contact between seal faces may change. For example, if there is any change in the wear condition, the indication may also change (and correspondingly the deterioration AE energy response may change).

For example, an increase in the magnitude of the indication obtained by the monitoring system (e.g. an increase in the deterioration AE energy) may correspond to an increase in the wear condition (e.g. greater wear severity). The obtained indication may be compared to a baseline indication to determine that the wear severity is increased. Alternatively, the obtained indication may be operated on to obtain a deterioration AE energy and the obtained deterioration AE energy may be compared to a baseline deterioration AE energy.

When the seal is determined to be operating at a greater severity of contact between the seal faces, the rate of deterioration may increase. When the seal is determined to be operating at a lower severity of contact between the seal faces, the rate of deterioration may decrease. For example, the expected lifetime of the component may decrease at a greater rate if there is a greater severity of contact between the seal faces in comparison to a lower severity of contact.

In examples the indication, V, may comprises a filtered raw AE indication, $V_{raw}$, for example, by a high pass filter (e.g. $V_{raw} \rightarrow V$). For example the high pass filter may have a cut-off frequency of 100kHz.

The determining an estimate of remaining lifetime of the seal component may be further based on a comparison between the indication and the baseline acoustic emission energy. The indication, V, is indicative of an accumulation of acoustic emission energy emitted from the seal component over a period of time, $E_T$. Thus the indication, V, and the baseline acoustic emission energy, $E_b$, may be compared. For example, the ratio of the deterioration energy, $E_d$, and the baseline acoustic emission energy, $E_b$, may be used to determine a remaining useful lifetime of the seal component, $T_u$. The expected lifetime of a component may be given as, $T_b$. For example, the expected lifetime of a component, $T_b$, may be 5 years. For example, the following mathematical relationship may be used to determine a remaining useful lifetime of the seal component:

$$T_u = T_b \left( 1 - \frac{E_d}{E_b} \right)$$

Alternatively, the remaining useful lifetime may be determined using the following mathematical relationship:

$$T_u = T_b \left( 1 - \frac{\sum_i^M \int_0^{T_i} V^2(t) dt}{E_b} \right)$$

The determining an estimate of remaining lifetime of the seal component may be further based on the indication being independent of temperature of the seal.

The indication is obtained by a sensor for sensing the acoustic emission energy emitted from the source of the acoustic emission energy.

The source of acoustic emission energy may be the seal component and/or a component of the seal assembly adjacent to the seal component.

For example the sensor may be any type of AE sensor. In examples, the effect of temperature variations on the AE sensor in the range of approximately 20°C to approximately 120°C may be negligible.

The method either comprises modifying the indication by an attenuation function, wherein the attenuation function has a value which depends on the distance of the sensor from a source of acoustic emission or modifying the baseline acoustic emission energy by an attenuation function, wherein the attenuation function has a value which depends on the distance of the sensor from a source of acoustic emission energy.

Modifying either the indication, V, or the baseline acoustic emission energy, $E_b$, by the attenuation function accounts for dissipation and/or damping of acoustic emission as the acoustic emissions propagate from the seal component to the sensor.

The value of the attenuation function may vary exponentially with distance of the sensor from the source of acoustic emission energy. For example, the attenuation function, f(x), may take an argument, x, which is the distance between the source of acoustic emissions and the sensor. The attenuation function, f(x), may relate the total acoustic emission energy measured over the period of time, $E_T$, to the total acoustic emission energy emitted from the source over the period of time, $E_0$:

$$E_T = E_0 f(x) = E_0 e^{-kx}$$

Where, k, is an attenuation factor.

The attenuation function may also depend on the geometry of the seal component in the seal assembly.

In some examples, the attenuation function may be obtained empirically. For example, plural acoustic signals may be sequentially generated in the seal assembly at different distances from the sensor. A first acoustic signal may be generated at a first distance and a second acoustic signal may be generated a second distance from the acoustic sensor and so on. Each acoustic emission signal may separately be recorded by a sensor. For example, the sensor may record the magnitude of each acoustic emission signal. The square of the acoustic emission signal may be proportional to the acoustic emission energy of each signal. A relationship between the magnitude of the acoustic signals and the distance of the source of the acoustic signals from the acoustic sensor may be used to infer a relationship between acoustic signal received by an acoustic sensor and the distance the signal has to travel between the source of the signal and the sensor. Increasing the number of generated acoustic signals at varying distances from the sensor may increase the accuracy of the attenuation function. In some examples, a pencil lead may be broken on the seal assembly to produce an acoustic signal.

The sensor may be configured to measure an amplitude of an acoustic emission signal.

The indication may be proportional to the magnitude of acoustic emissions detected by the sensor per unit time. The acoustic emission energy emitted by the seal component at an instant in time is proportional to the square of the indication at the instant in time.

The determining an estimate of remaining lifetime of the seal component based on the indication may comprise: squaring the indication to obtain a squared indication; and, determining a total acoustic emission energy emitted from the source of acoustic emission energy over the period of time based on the squared indication. For example, the squared indication, $V^2$, may be integrated with respect to time over the period of time to obtain a total acoustic emission energy, $E_{Ti}$, emitted from the source of acoustic emission energy over the period of time, $T_i$. This may be expressed mathematically as:

$$E_{Ti} = \int_0^{T_i} V^2(t)dt$$

The determining an estimate of remaining lifetime of the seal component based on the indication may comprise: squaring the indication to obtain a squared indication; and, integrating the squared indication with respect to time to obtain a total acoustic emission energy, $E_{Ti}$, emitted from the source of acoustic emission energy over the period of time, $T_i$.

The determining an estimate of remaining lifetime of the seal component based on the indication may comprise: squaring the indication to obtain a squared indication; and, integrating the squared indication with respect to time to obtain a total acoustic emission energy, $E_{Ti}$, emitted from the source of acoustic emission energy over the period of time, $T_i$ (e.g. a snap of time $T_i$); and, obtaining a deterioration energy, $E_d$, and, for example, comparing the deterioration energy with a baseline acoustic emission energy $E_b$.

The deterioration energy, $E_d$, may be defined as the total acoustic emission energy emitted over the deterioration time, $T_d$. For example, the deterioration energy, $E_d$, may be defined as the sum of M snaps of acoustic emission energy, $E_{Ti}$.

The determining an estimate of remaining lifetime of the seal component may be further based on a rate of change of the acoustic emission energy over a period of time.

The indication may be an amplitude of the acoustic signal which is obtained during the operation of the rotating equipment.

A first wear regime may comprise a relationship between acoustic emission energy from a seal component at per unit time and a magnitude of wear of the seal component per unit time. For example, the first wear regime of the seal component may comprise a linear relationship between the acoustic emission energy per unit time, $\dot{E}$, and the magnitude of wear per unit time, W. This may expressed mathematically as:

$$\dot{E} = c\dot{W}$$

Where, c, is a constant of proportionality.

The first wear regime may be an adhesive wear regime.

A second wear regime may comprise a relationship between acoustic emission energy from a seal component at per unit time and a magnitude of wear of the seal component per unit time.

In other seal assemblies the first and/or the second wear regimes may have a different functional form, for example, polynomial, exponential, or logarithmic.

For example, the second wear regime of the seal component may comprise a linear relationship between the acoustic emission energy per unit time, $\dot{E}$, and the magnitude of wear per unit time, $\dot{W}$. This may expressed mathematically as:

$$\dot{E} = c'\dot{W}$$

Where, c', is a constant of proportionality.

In examples wherein the first wear regime has linear functional form as described above and the second wear regime has a linear functional form as described above, the respective constants of proportionality, c, and, c', are not equal.

The second wear regime may be an abrasive wear regime.

A transition between a first and second wear regimes may occur when a parameter of the seal assembly changes. For example, an increase in the rate of change of total acoustic emission energy, $E_T$, over a selected period of time (e.g. 1 second) may correspond to a transition from a first wear regime to a second wear regime.

Deterioration wear, $W_d$, may be defined as the amount of wear of the seal component due to the emission of the deterioration energy, $E_d$, e.g. the seal component wears down by a total amount of, $W_d$, during the total time that the deterioration energy, $E_d$, is emitted from the seal component.

For a given wear regime the relationship between: the total lifetime of the seal assembly, $T_b$ e.g the baseline total lifetime of the seal assembly; the baseline acoustic emission energy, $E_b$; the deterioration energy, $E_d$; and, the estimated remaining lifetime, $T_u$, expressed mathematically as:

$$T_b \cdot \left(1 - \frac{E_d}{E_b}\right) = T_u$$

The above relationship may be rewritten as a relationship between: deterioration wear, $W_d$; baseline wear, $W_{base}$; total lifetime of the seal assembly, $T_b$; and, the estimated remaining lifetime, $T_u$:

$$T_u = T_b \cdot \left(1 - \frac{W_d}{W_{base}}\right)$$

The method may comprise replacing the seal component once the estimate of remaining lifetime has elapsed. Once the rotating equipment has been operated for a period of time less than or equal to the estimate of remaining useful lifetime of the seal component, an operator of the rotating equipment may cease operation of the rotating equipment. The seal assembly may be dismantled to allow access to the deteriorated seal component. The deteriorated seal component may be removed and replaced with a new seal component. The seal assembly may be reassembled and the rotating equipment may be operated again.

Advantageously, replacing the seal component once the estimate of remaining lifetime has elapsed may prevent wear and/or damage to the other seal components in the seal assembly.

In an aspect of the disclosure there is provided a controller configured to perform any of the computer implemented methods of determining when to replace a seal component of a seal assembly described herein.

For example, the controller may be part of a condition monitoring system e.g. the condition monitoring system may comprise the controller.

In an aspect of the disclosure there is provided a system comprising: a sensor for attachment with a seal assembly and configured to measure an indication of acoustic emission energy emitted from the seal assembly when the seal assembly is in use; and, a controller configured to perform any of the computer implemented methods of determining when to replace a seal component of a seal assembly described herein.

For example, the system may be a condition monitoring system as described herein.

In an aspect of the disclosure there is provided an apparatus comprising: a seal assembly; a sensor attached to the seal assembly and configured to measure an indication of acoustic emission energy emitted from the seal assembly when the seal assembly is in use; and, a controller configured to perform any of the computer implemented methods of determining when to replace a seal component of a seal assembly described herein.

For example, the controller may be part of a condition monitoring system e.g. the condition monitoring system may comprise the controller.

**Figures**

Some embodiments will now be described, by way of example only, with reference to the figures, in which:

Figures 1A illustrates an axial cross-section of a first seal assembly;
Figures 1B illustrates an axial cross-section of a second seal assembly;
Figure 2 illustrates a flow chart of a method of the present disclosure;
Figure 3 illustrates a flow chart of a method of the present disclosure;
Figure 4 illustrates a graph of experimental results with cumulative acoustic emission energy plotted against time;
Figures 5A and 5B illustrate a graph of experimental results with total acoustic emission energy emitted over a period of time plotted against wear of a seal component;
Figure 6 illustrates a flow chart of a method of empirically obtaining an attenuation function;

In the drawings like reference numerals are used to indicate like elements.

**Specific Description**

The present invention is applicable to all types of mechanical seal. For example, the invention is applicable to all types of end-face mechanical seals for use in rotating equipment. Herein the term rotating equipment may refer to any apparatus comprising a driver side and a driven side, wherein the driver side is coupled to the driven side by a coupling between two rotary shafts or between a rotary shaft and some other driven member. Examples of rotating equipment include: compressors and process pumps. End-face mechanical seal may be used to prevent leakage of fluid from an inboard side to an outboard side of the mechanical seal.

End-face mechanical seals comprise a mating ring and a primary ring. Both the mating ring and the primary ring are annular circular cylinders. The mating ring is positioned so that an axial face (e.g. seal face) of the mating ring opposes an axial face of the primary ring. The mating ring is disposed on the driving side of the rotary coupling and is positioned so that an axis of rotation of the rotary coupling is coincident with the central longitudinal axis of the mating ring. The mating ring has a fixed axial position relative to the shaft (or for example, relative to the pump casing). In other words, the mating ring does not move relative to the shaft. The mating ring may be mounted to the shaft or to another stationary part of a rotating equipment e.g. a pump casing or a seal plate. The mating ring is rotatable about the axis of rotation of the rotary coupling e.g. by the shaft which drives the rotating equipment. The primary ring is disposed on the driven side of the rotary coupling and positioned so that an axis of rotation of the rotary coupling is coincident with the central longitudinal axis of the primary ring. The primary ring is configured to be movable axially relative to the mating ring e.g. the primary ring can move axially (e.g. float) relative to the mating ring to vary the gap between the primary ring and the mating ring.

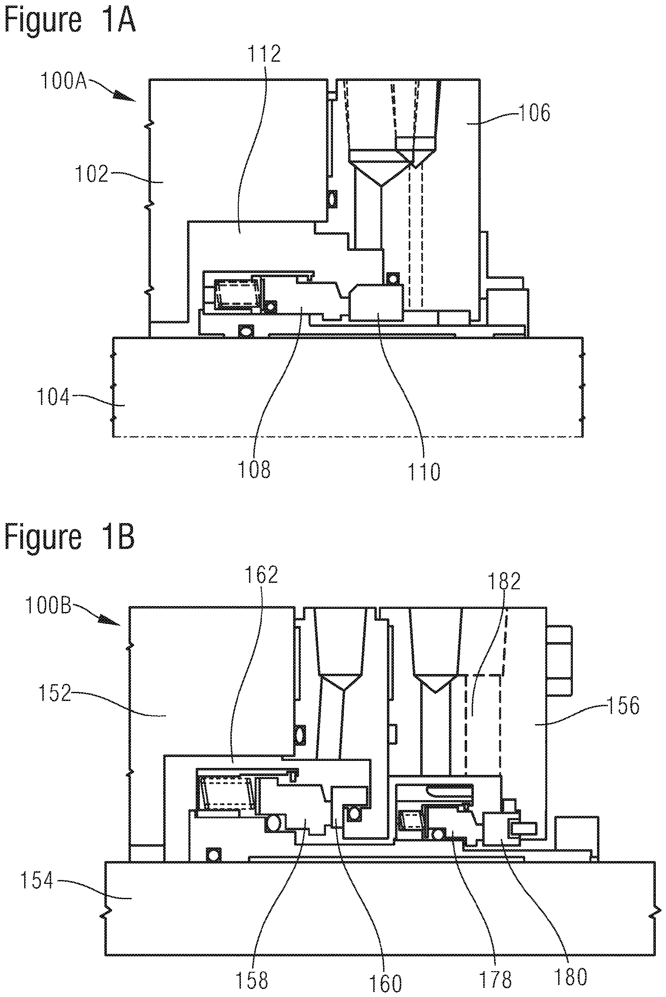

In the examples shown in Figures 1A and 1B the mating rings are stationary mounted and the primary rings are shaft mounted.

A seal fluid provides a thin film of fluid between the opposing faces of the primary ring and the mating ring. For example, the seal fluid may be fluid sealed by the mechanical seal provided by the primary ring and the mating ring. For example, the seal fluid may comprise any of the following types: process fluid; a buffer fluid; and, a barrier fluid. The type of seal fluid for a given mechanical seal may depend on the general mechanical seal arrangements as described by the API682 standard *et alia*. The thin film, sometimes referred to as a fluid film, generates hydrostatic forces (e.g. forces which are present regardless of whether the mating ring is stationary or rotating) and hydrodynamic forces (e.g. forces which are present only when the mating ring rotates) which are exerted on the mating ring and primary ring. Grooves may be provided on the mating ring (e.g. logarithmic spiral grooves) which are involved in generating the hydrodynamic forces, for example, when the mating ring rotates, the grooves may shear the seal fluid flow towards the central longitudinal axis of the mating ring which increases the pressure of the seal fluid flow.

Figure 1A illustrates an axial cross-section of a first seal assembly 100A. Figure 1B illustrates an axial cross-section of a second seal assembly 100B Both the first seal assembly 100A and the second seal assembly 100B are designed for containment of process fluid which may comprise hazardous fluids and light hydrocarbons.

The first seal assembly 100A comprises: a pump casing 102; a pump shaft 104; a seal cartridge 106; a primary ring 108; a mating ring 110; and, a channel 112 for receiving a process fluid.

The pump shaft 104 is disposed through a central hole of the primary ring 108. The pump shaft 104 is disposed through a central hole of the mating ring 110. The pump casing 102 encloses at least a portion of any of: the pump shaft 104; the primary ring 108; and, the mating ring 110. The seal cartridge 106 encloses at least a portion of any of: the pump shaft; the primary ring 108; and, the mating ring 110.

The channel 112 is delimited by channel sides. A portion of the primary ring 108 forms at least part of the channel sides of channel 112. A portion of the mating ring 110 forms at least part of the channel sides of channel 112. A portion of the pump casing 102 forms at least part of the channel sides of channel 112. A portion of the seal cartridge 106 forms at least part of the channel sides of channel 112.

The primary ring 108 is configured to the rotate about and relative to the pump shaft 104. The mating ring 110 is configured to the resist rotation about and relative to the pump shaft 104. The channel 112 is configured to receive a flow of process fluid.

The second seal assembly 100B comprises: a pump casing 152; a pump shaft 154; a seal cartridge 156; a inboard primary ring 158; a inboard mating ring 160; an outboard primary ring 178; an outboard mating ring 180; a first channel 162 for receiving a process fluid; a second channel 182 for receiving a buffer fluid.

The pump shaft 154 is disposed through a central hole of the inboard primary ring 158. The pump shaft 154 is disposed through a central hole of the inboard mating ring 160.

The pump shaft 154 is disposed through a central hole of the outboard primary ring 178.

The pump shaft 154 is disposed through a central hole of the outboard mating ring 180.

The pump casing 152 encloses at least a portion of any of: the pump shaft 154; the inboard primary ring 158; the inboard mating ring 160 the outboard primary ring 178; and, the outboard mating ring 180. The seal cartridge 156 encloses at least a portion of any of: the pump shaft; the inboard primary ring 158; the inboard mating ring 160 the outboard primary ring 178; and, the outboard mating ring 180.

The first channel 162 is delimited by first channel sides. A portion of the inboard primary ring 158 forms at least part of the first channel sides of first channel 162. A portion of the inboard mating ring 160 forms at least part of the first channel sides of first channel 162. A portion of the pump casing 152 forms at least part of the first channel sides of first channel 162. A portion of the seal cartridge 156 forms at least part of the first channel sides of first channel 162.

The second channel 182 is delimited by second channel sides. A portion of the inboard primary ring 158 forms at least part of the second channel sides of second channel 182. A portion of the inboard mating ring 160 forms at least part of the second channel sides of second channel 182. A portion of the outboard primary ring 178 forms at least part of the second channel sides of second channel 182. A portion of the outboard mating ring 180 forms at least part of the second channel sides of second channel 182. A portion of the seal cartridge 156 forms at least part of the second channel sides of second channel 182.

The inboard primary ring 158 is configured to the rotate about and relative to the pump shaft 154. The inboard mating ring 160 is configured to the resist rotation about and relative to the pump shaft 154. The outboard primary ring 178 is configured to the rotate about and relative to the pump shaft 154. The outboard mating ring 180 is configured to the resist rotation about and relative to the pump shaft 154. The first channel 162 is configured to receive a flow of process fluid. The second channel 182 is configured to receive a flow of barrier fluid or a buffer fluid.

In use, the inboard primary ring 158, the inboard mating ring 160, and the process fluid are configured to provide an inboard mechanical seal. In use, the outboard primary ring 178, the outboard mating ring 180, and either the barrier fluid or the buffer fluid are configured to provide an outboard mechanical seal.

The inboard seal faces a process side e.g. the inboard seal seals against a process side. The outboard seal faces an atmospheric side e.g. the outboard seal seals against an atmospheric side.

In examples comprising two mechanical seals (e.g. an inboard mechanical seal and an outboard mechanical seal), two acoustic emission sensors may be provided e.g. a first acoustic emission sensor and a second acoustic emission sensor. In such examples, the first acoustic emission sensor may be configured to obtain an indication of an accumulation of acoustic emission energy emitted from one or more components the inboard mechanical seal and the second acoustic emission sensor may be configured to obtain an indication of an accumulation of acoustic emission energy emitted from one or more components of the outboard mechanical seal.

In examples comprising two mechanical seals (e.g. an inboard mechanical seal and an outboard mechanical seal), two acoustic emission sensors may be provided e.g. a first acoustic emission sensor and a second acoustic emission sensor. In such examples the first acoustic emission sensor may be closer to the source of acoustic emission than the second acoustic emission sensor.

The first acoustic emission sensor may obtain an indication of an acoustic emission energy emitted from a given acoustic event which is greater in magnitude (e.g. a greater amplitude) than an indication of the same acoustic event obtained by the second acoustic emission sensor. There may be a phase shift between the indication obtained by the first acoustic emission sensor and the indication obtained by the second acoustic emission sensor. In such examples, the first acoustic emission sensor may be configured to obtain an indication of an accumulation of acoustic emission energy emitted from one or more components the inboard mechanical seal and the second acoustic emission sensor may be configured to obtain an indication of an accumulation of acoustic emission energy emitted from one or more components of the outboard mechanical seal. Additionally, the first acoustic emission sensor may be configured to obtain an indication of an accumulation of acoustic emission energy emitted from one or more components of the outboard mechanical seal and the second acoustic emission sensor may be configured to obtain an indication of an accumulation of acoustic emission energy emitted from one or more components of the inboard mechanical seal. In such examples, indications obtained by first acoustic emission sensor may be filtered to remove indications emitted from the outboard mechanical seal and to retain indications emitted from the inboard mechanical seal and, indications obtained by second acoustic emission sensor may be filtered to remove indications emitted from the inboard mechanical seal and to retain indications emitted from the outboard mechanical seal.

In examples comprising two mechanical seals (e.g. an inboard mechanical seal and an outboard mechanical seal), one acoustic emission sensor may be provided. A probability of a particular event based

The condition monitoring system may be configured to monitor performance indicator parameters in a seal to determine an operating condition of the seal.

The performance indicator parameters may include any of: temperature; and, magnitude of acoustic emission (e.g. an indication of the acoustic emission energy as described herein).

The performance indicator parameters may include the change with respect to time of any of: temperature; and, magnitude of acoustic emission (e.g. an indication of the acoustic emission energy as described herein). For example, the change of the parameters may be obtained over a set period of time (e.g. 1 second).

The performance indicator parameters may be obtained by any suitable sensor.

Embodiments of the present disclosure provide a method for determining an estimate of remaining lifetime of a seal component in a seal assembly. The seal component of the seal assembly for which an estimate of remaining lifetime may be determined may be a mating ring or a primary ring. In some examples, the estimate of remaining lifetime may be determined for the combination of the mating ring and the primary. The estimate of remaining lifetime of the seal component depends on a given seal assembly.

In examples, primary seal rings may comprise carbon-graphite. In examples, mating rings may comprise silicon carbide.

A seal assembly may vary in structure for a given use. As provided by the present disclosure there exists a principle capable of general application wherein, seal components of seal assemblies may have varying lifetimes, dependent on physical properties of particular system, for example: the size of the seal components of the seal assembly; the type of seal fluid used; and/or any other property described herein. The estimated lifetime of different seal components of different seal assemblies may be determined based on characteristics of the seal component of the seal assembly and its use, such as: an indication of an accumulation of acoustic emission (AE) energy emitted from the seal component over a period of time; a baseline acoustic emission energy; a comparison between the indication and the baseline acoustic emission energy; a modification of the indication by an attenuation function; squaring the indication to obtain a squared indication and determining a total acoustic emission energy emitted from the source of acoustic emission energy over the period of time based on the squared indication; rate of change of the acoustic emission energy over a period of time. In examples any of the indications may be filtered e.g. the indications may be passed through any of: a high-pass filter; a low-pass filter; and, a bandpass filter. Knowing these parameters, an estimated lifetime of the seal component in the seal assembly can be determined. This can enable maintenance and replacement of the seal components before they become worn to a deteriorated state.

The computer implemented methods of determining when to replace a seal component of a seal assembly described herein may be implemented by a computer, for example, a controller. The computer is configured to: obtain an indication of acoustic emission energy emitted from the seal component over a period of time and the computer may perform one or more numerical estimation methods on the indication; and, determine an estimate of remaining lifetime of the seal component based on the indication which are arrived at through the numerical estimation method. The numerical estimation methods may be performed in accordance to any of the principles laid out in Numerical Recipes in C: The Art of Scientific Computing. In some examples, the indication may be a function V, which depends on time (e.g. V(t)). The numerical estimation may comprise squaring the indication to obtain a square indication, $V^2$. The square indication may be integrated with respect to time between limits the 0 to T wherein, T, is the period of time over which a rotating equipment is operated. The numerical estimation may comprise performing an numerical integration on the squared indication, for example, using any of: the midpoint rule; the trapezoidal rule; Newton-Cotes formulas.

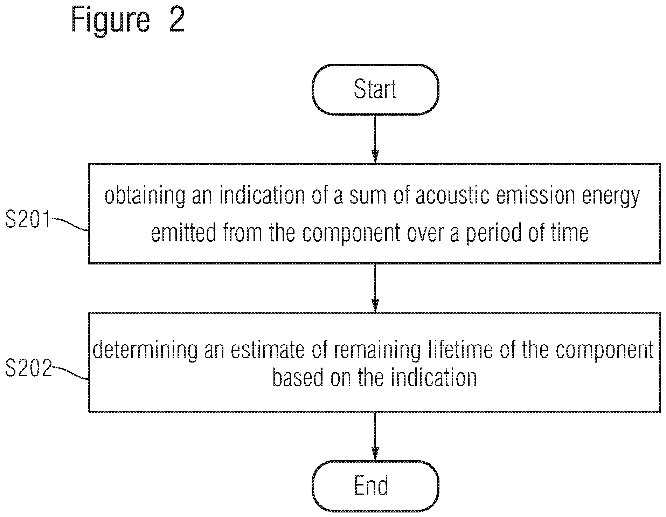

A first example of a computer implemented method of estimating the remaining lifetime of a seal component of a seal assembly will now be described with reference to Figure 2.

Obtain S201, an indication of acoustic emission energy emitted from the seal component over a period of time.

The indication, V, is obtained by a sensor mounted on the seal assembly, for example, an acoustic emission sensor such as any of those described herein. In this example, the indication is a proportional to the magnitude of acoustic emissions detected by the sensor per unit time.

The acoustic emission energy emitted by the seal component at an instant in time is proportional to the square of the indication at the instant in time. The total acoustic emission energy, $E_{T_i}$, emitted over a period of time, $T_i$, is proportional to the square of the indication, $V^2$, integrated with respect to time over the period of time, $T_i$. This may expressed mathematically as:

$$E_{T_i} = \int_0^{T_i} V^2(t) dt$$

Thus, it can be seen that indication, V, is indicative of the acoustic emission energy emitted from the seal component.

Determine S202, an estimate of remaining lifetime of the seal component based on the indication.

For example, the following mathematical relationship between: a total lifetime of the seal assembly, $T_b$; the baseline acoustic emission energy, $E_b$; total acoustic emission energy, $E_{T_i}$; and, the estimated remaining lifetime, $T_u$, may be used to determine the estimated remaining lifetime, $T_u$. The relationship may be expressed mathematically as:

$$T_b \cdot \left(1 - \frac{E_{T_i}}{E_b}\right) = T_u$$

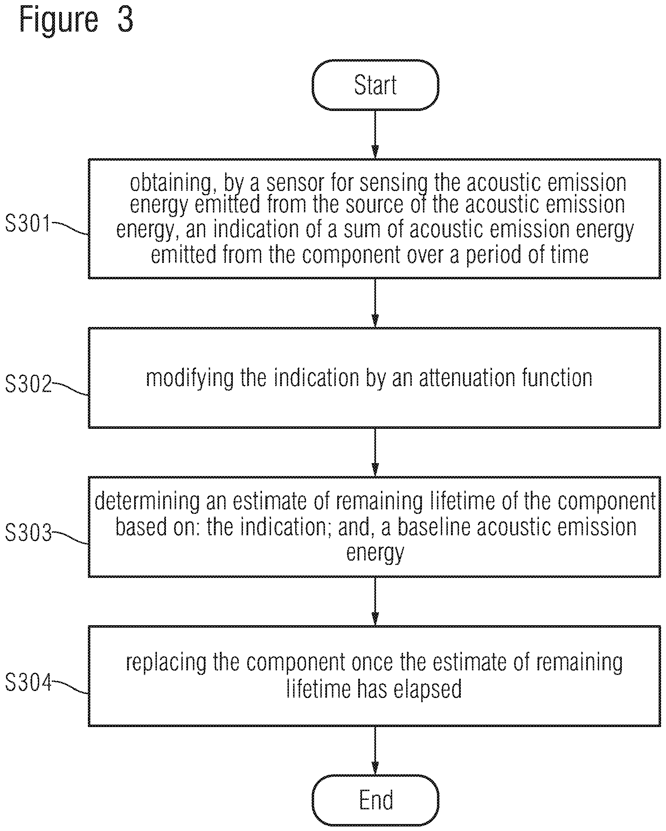

Another example computer implemented method of estimating the remaining lifetime of a seal component of a seal assembly will now be described with reference to Figure 3.

Obtain, S301, by a sensor for sensing the acoustic emission energy emitted from the source of the acoustic emission energy, an indication of an accumulation of acoustic emission energy emitted from the seal component over a period of time.

The sensor may be an acoustic emission (AE) sensor, for example, a piezoelectric AE sensor. In examples wherein the sensor is an AE sensor, the sensor is configured to sense an acoustic emission and output an indication comprising a voltage indicative of the magnitude of the acoustic emission. For example, the magnitude of the voltage may be proportional to the magnitude of the acoustic emission.

The acoustic emission energy emitted by the seal component at an instant in time is proportional to the square of the indication at the instant in time. The total acoustic emission energy, $E_{T_i}$, emitted over a period of time is proportional to the square of the indication integrated with respect to time over the time interval, $T_i$. This may expressed mathematically as:

$$E_{T_i} = \int_0^{T_i} V^2(t)dt$$

Thus, it can be seen that indication, V, is indicative of the acoustic emission energy, $E_{T_i}$, emitted from the seal component over the period of time, $T_i$.

Optionally, the raw acoustic emission data obtained may be filtered (for example, by a high pass filter, for example, with a flat bandpass, for example a Butterworth high pass filter) to obtain filtered acoustic emission data. The filtered acoustic emission data may be considered the indication, V. The cut off of the filter may be, at least 50 kHz, or at least 100 kHz, or at least 150 kHz.

A root-mean-squared (RMS) of value of either of: the raw acoustic emission data; or, the filtered acoustic emission data; may be used to obtain an RMS acoustic emission data. The RMS acoustic emission data may be considered the indication, V.

In some examples, the indication and/or the sensor may be analogue. In some examples the sensor may be a microphone which may be analogue. The microphone may be configured to sense an acoustic emission and output an indication comprising a voltage indicative of the acoustic emission. For example, the microphone may be configured to sense acoustic emissions outside of the range of frequencies audible to humans e.g. frequencies greater than those audible to humans. In examples, the magnitude of the voltage of the may be proportional to the magnitude of the acoustic emission. Accordingly, the total acoustic emission energy may be obtained from the acoustic emission by any of the ways described herein.

Optionally, modify, S302, the indication by an attenuation function.

The attenuation function accounts for dissipation and/or damping of acoustic emissions as the acoustic emissions propagate from the seal component to the sensor. The attenuation function has a value which depends exponentially on the distance of an acoustic sensor from a source of acoustic emission energy. The attenuation function, f(x), takes an argument, x, which is the distance between the source of acoustic emissions and the sensor. The attenuation function, f(x), may relate the total acoustic emission energy measured over the period of time, $E_T$, to the total acoustic emission energy emitted from the source over the period of time, $E_0$:

$$E_T = E_0 f(x) = E_0 e^{-k_1 x}$$

Where, $k_1$, is an attenuation factor.

Alternatively, modify, S302a, the baseline acoustic emission energy by the attenuation function.

In this alternative step, the attenuation function, g(x), takes an argument, x, which is the distance between the source of acoustic emissions and the sensor. The attenuation function, g(x), relates the baseline acoustic emission energy which would be measured at a sensor, $E_b$, to the baseline acoustic emission energy which would be measured at the source, $E_{bsource}$:

$$E_b = E_{bsource} g(x) = E_{bsource} e^{-k_2 x}$$

Where, $k_2$, is an attenuation factor.

In examples, each of the baseline acoustic emission energy and the indication may be obtained by a sensor a set distance away from the site of acoustic emissions. As the acoustic emissions for obtaining the baseline acoustic emission energy and the indication travel through the same impedances (e.g. the material of the seal assembly between the source of acoustic emission and the sensor for obtaining the baseline acoustic emission energy and the indication) the attenuation of each signal due to the impedances will be approximately the same. Accordingly, in such examples, there is no need to determine an attenuation function because the effects of attenuation on the obtained signals will already be accounted for (e.g. the signal in each case will be attenuated by an approximately equal amount). Therefore, the two signals will be directly comparable without the need to obtain and apply an attenuation function.

Determine, S303, an estimate of remaining lifetime of the seal component based on: the indication; a baseline acoustic emission energy.

As detailed above, the indication, V, of the accumulation of acoustic emission energy emitted over the period of time may be used to obtain a value of the accumulation of acoustic emission energy emitted over the period of time, $E_{Ti}$.

The indication may be modified as set out in optional step S302 and may be omitted. For example, when the attenuation of the obtained baseline acoustic emission energy and the indication are already accounted for.

A deterioration energy may be obtained based on the indication. A deterioration energy, $E_d$, may be defined as the total acoustic emission energy emitted over the deterioration time, $T_d$. For example, the deterioration energy, Ed, may be defined as the sum of M snaps of acoustic emission energy, $E_{Ti}$. This may be expressed mathematically as:

$$E_d = E_{T_1} + E_{T_2} + \cdots + E_{T_M} = \sum_i^M E_{T_i} = \sum_i^M \int_0^{T_i} V^2(t)dt$$

$$E_d = \int_0^{T_1} V^2(t)dt + \int_0^{T_2} V^2(t)dt + \cdots + \int_0^{T_M} V^2(t)dt$$

Advantageously, summing over a plurality of snaps of acoustic emission energy reduces the amount of processing power required to integrate the indication of acoustic emission energy. For example, the load on a device configured to perform the integration (e.g. a computer; e.g. an analogue integrator) may be reduced.

The deterioration energy $E_d$, may be proportional to the deterioration wear, $W_d$, of the seal component over the deterioration time, $T_d$. This may expressed mathematically as:

$$E_d = K_{E-W} W_d$$

Where, $K_{E-W}$, is a constant of proportionality.

A wear regime comprises a relationship between acoustic emission energy from a seal component at per unit time and a magnitude of wear of the seal component per unit time. In the present example, the wear regime of the seal component comprises a linear relationship between the acoustic emission energy per unit time, $\dot{E}$, and the magnitude of wear per unit time, $\dot{W}$. This may expressed mathematically as:

$$\dot{E} = c\dot{W}$$

Where, c, is a constant of proportionality.

The deterioration energy, $E_d$, which is based on the indication is compared to a baseline acoustic emission energy, $E_b$. The baseline acoustic emission energy, $E_b$, is the expected acoustic emission energy to be emitted by a seal component over its expected lifetime, $T_b$. For example, the expected lifetime of the seal component may be five years. Therefore, a baseline acoustic emission energy data, $E_b$, for such a seal component would be the expected acoustic emission energy to be emitted by a seal component over five years of use.

A mathematical relationship between: the total lifetime of the seal assembly, $T_{total}$; the baseline acoustic emission energy, $E_b$; the deterioration energy, $E_d$; and, the estimated remaining lifetime, $T_u$. The relationship may be expressed mathematically as:

$$T_{total} \cdot \left(1 - \frac{E_d}{E_b}\right) = T_u$$

By using the relationships between:

- Baseline acoustic emission energy, $E_b$; baseline acoustic emission indication, $AE_{base}$; and, total lifetime of the seal assembly, $T_b$:

  ○

$$E_b = AE_{base}.T_b$$

- Estimated remaining acoustic emission energy, $E_u$; baseline acoustic emission indication, $AE_{base}$; and, the estimated remaining lifetime, $T_u$:

  ○

$$E_u = AE_{base}.T_u$$

Replace, S304, the seal component once the estimate of remaining lifetime has elapsed.

Operation of the rotating equipment is ceased. The seal assembly is dismantled such that access to the deteriorated seal component is provided. Then the deteriorated seal component is replaced with a new seal component.

To determine an estimate of remaining lifetime of the seal component, any of the following constraints may additionally be adhered to.

The total acoustic emission energy, $E_T$, is linear to operational wear, $W_T$. In other words, the ratio of the total acoustic emission energy, $E_T$, and operational wear is equal to a constant of proportionality, $c_1$. This may be expressed mathematically as:

$$\frac{E_T}{w_T} = c_1$$

Seal fluid may affect the severity of contact between seal faces of the seal assembly. In examples, carbon dioxide provides higher contact severity than light oil. Accordingly, the wear may depend on the seal fluid used.

The total acoustic emission energy, $E_T$, is linearly proportional to seal area of the seal component, A. In other words, the ratio of the total acoustic emission energy, $E_T$, and seal area, A, is equal to a constant of proportionality, $c_2$. This may be expressed mathematically as:

$$\frac{E_T}{A} = c_2$$

For example, doubling the seal area, A, doubles the acoustic emission energy emitted over the period of time, T, provided the same asperity surface load is constant and the lubricating fluid in each case is the same.

In examples, the wear may be characterised by a specific wear coefficient $W_c$. The specific wear coefficient is directly proportional to wear volume, $V_w$, and inversely proportional to the product of force applied tangentially to the surface of the seal face, F, and load applied tangentially to the surface of the seal face, L. This may be expressed mathematically as:

$$W_c = \frac{V_W}{FL}$$

Wear may be determined by the level of asperity contact and the type of seal fluid. For a poor lubricating seal fluid (e.g. less lubrication) the wear coefficient (wear volume/ load * distance) is greater than for a well lubricating fluid (e.g. more lubrication). It has been observed that the amount of energy required to abrade a given amount material does not change when seal fluid is changed (e.g. the amount of energy to abrade a given amount of material is invariant with respect to seal fluid.

A mechanical seal for a poorly lubricating seal fluid may be designed differently to a mechanical seal for a well lubricating seal fluid that seals a well lubricating fluid. For example, a greater load can be applied to seal closing forces to reduce leakage in a mechanical seal for a well lubricating seal fluid. If a mechanical seal is used for both poorly lubricating seal fluids and well lubricating seal fluids, the mechanical seal may be limited to use with operating parameters suitable for the poorly lubricating fluid (e.g. operating parameters may include any of: speed; sealing pressure) in order to achieve a minimum guarantied seal lifetime.

For example, if a pressure differential is low at the inboard seal, increased severity of contact is more likely on the inboard seal than on the outboard seal which still operated at higher pressure differential to atmospheric pressure.

The indication may also be received by a controller via a communication interface such as over a network or where appropriate direct measurement may be performed by appropriate measurements. For example direct measurements of the indication may be taken by any appropriate apparatus such as those discussed herein.

To support the present disclosure tests were conducted using with four separate type mechanical seal assemblies. Acoustic emission sensors were attached to each of the seal assemblies. Each of the PAC wide band sensors were configured to measure AEs from each of seal assemblies.

A first seal assembly was attached to a first rotating equipment. The first seal assembly had a hydraulic balance ratio of 100% (unbalanced) and the first rotating equipment operated continuously for 13 days (e.g. a test period of approximately 300 hours). A second seal assembly was attached to a second rotating equipment. The second seal assembly had a hydraulic balance ratio of 100% (unbalanced) and the second rotating equipment operated continuously for 300 hours. A third seal assembly was attached to a third rotating equipment. The third seal assembly had a hydraulic balance ratio of 80% (balanced) and the third rotating equipment operated continuously for 600 hours. A fourth seal assembly was attached to a fourth rotating equipment. The fourth seal assembly had a hydraulic balance ratio of 100% (unbalanced) and the fourth rotating equipment operated continuously for 600 hours.

Hydraulic balance ratios of 100% and 80% ensure permanent contact between the seal face components at controlled but different severities of load.. After cessation of operation of the respective rotating equipment, the wear of each seal component was obtained. The wear may be obtained by finding the difference between a measurement of the seal component taken before operation of the seal assembly and a measurement of the seal component taken after cessation of operation of the rotating equipment. An axial length of the seal component may be measured before operation and after cessation of the operation of the rotating equipment. The raw acoustic emission signals obtained from each seal assembly was filtered by a 100kHz Butterworth high pass filter to obtain filtered acoustic emission data. A RMS of value of the filtered acoustic emission data was obtained from the filtered emission data to obtain RMS filtered acoustic data.

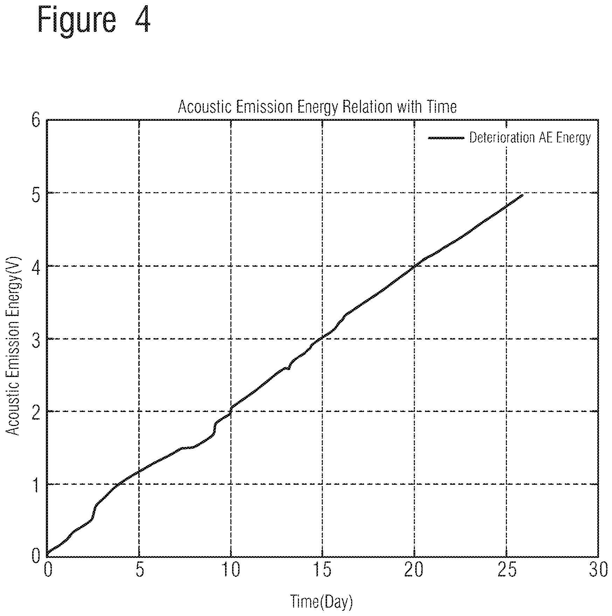

Figure 4 shows cumulative RMS filtered acoustic data, measured in volts, against time, measured in days.

Table 1 below summarises the results of the tests on each of the first through fourth seal assemblies.

Table 1

|  | First seal assembly | Second seal assembly | Third seal assembly | Fourth seal assembly |
|---|---|---|---|---|
| Seal Wear (% of total wear allowance) | 1.15 | 1.1 | 1 | 1.5 |
| Test period (days) | 12.43 | 12.43 | 25.81 | 25.81 |
| Contact AE Energy (V) | 61.7470 | 54.5498 | 44.6463 | 66.4802 |
| Contact AE Energy rate (V per day) | 4.967 | 4.388 | 1.729 | 2.57 |
| Wear rate (% of total wear allowance per day) | 0.0925 | 0.0885 | 0.0385 | 0.058 |

The results of the deterioration tests on the John Crane (RTM) type 3648 seal demonstrate that there exists a relationship between acoustic emission energy and wear.

In the present example, the primary ring comprises carbon graphite and the mating ring comprise silicon carbide. There was no measurable wear of the mating ring and therefore, the total seal wear comprises the wear on the primary. The reason for this is that in the seal assembly carbon-graphite wears more readily than silicon carbide.

In examples, the total seal wear may comprise the wear on both the primary ring and the mating ring. In examples, the primary ring and the mating ring may consist essentially of the same material, for example, silicon carbide and carbon-graphite.

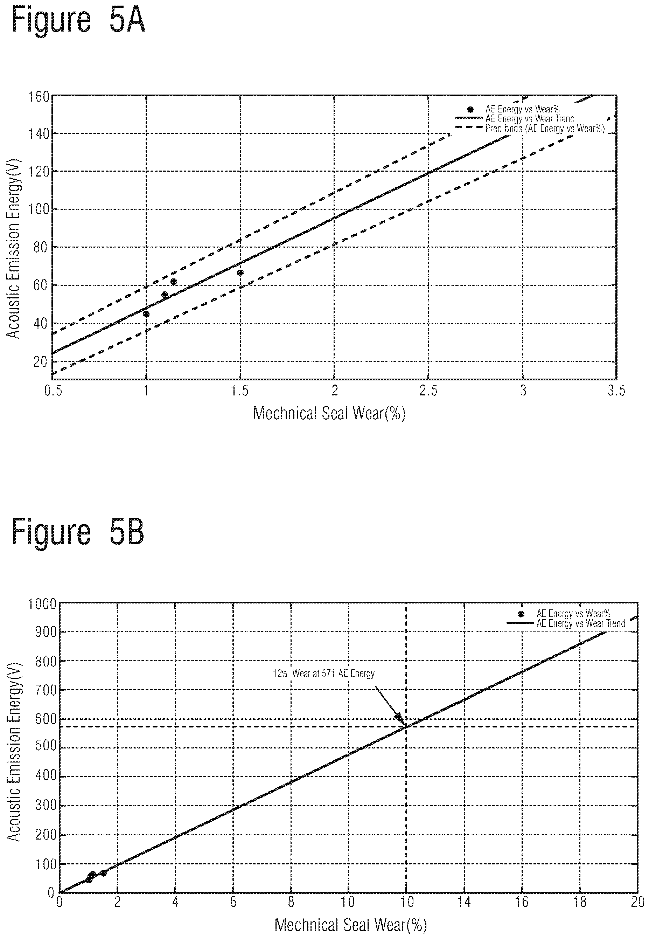

Figure 5A shows a scatter graph of the acoustic emission energy, measured in volts, against wear, measured in millimetres. A curve of best-fit is included to generalise the relationship between the acoustic emission energy and the wear. The relationship between the acoustic emission energy and the wear, in this example, is linear and accordingly a straight line is the most appropriate curve of best-fit for the data. The relationship between acoustic emission energy and wear may be extrapolated as shown in Figure 5B.

A first wear regime comprises a relationship between acoustic emission energy from a seal component at per unit time and a magnitude of wear of the seal component per unit time. In the present example, the first wear regime of the seal component comprises a linear relationship between the acoustic emission energy per unit time, $\dot{E}$, and the magnitude of wear per unit time, $\dot{W}$. This may expressed mathematically as:

$$\dot{E} = c\dot{W}$$

Where, c, is a constant of proportionality.

In other seal assemblies the first wear regime may have a different functional form, for example, polynomial, exponential, or logarithmic.

In some examples, there may be more than one wear regime. For example a second wear regime comprising a relationship between acoustic emission energy from a seal component at per unit time and a magnitude of wear of the seal component per unit time.

A transition between a first and second wear regimes may occur when a parameter of the seal assembly changes. For example, an increase in the rate of change of total acoustic emission energy, $E_T$, over a selected period of time (e.g. 1 second) may correspond to a transition from a first wear regime (e.g. an adhesive regime) to a second wear regime (e.g. an abrasive regime).

The attenuation function was obtained empirically and was found to comprise an exponential decay which depends on the distance, x, between the sensor and the source of acoustic emission. The modified acoustic emission energy, $E_{mod}$, is related to the acoustic emission energy at the source of the acoustic emission, $E_0$, by the following equation.

$$E_{mod} = e^{-k_3 x} E_0$$

Wherein $k_3$ is an attenuation factor.

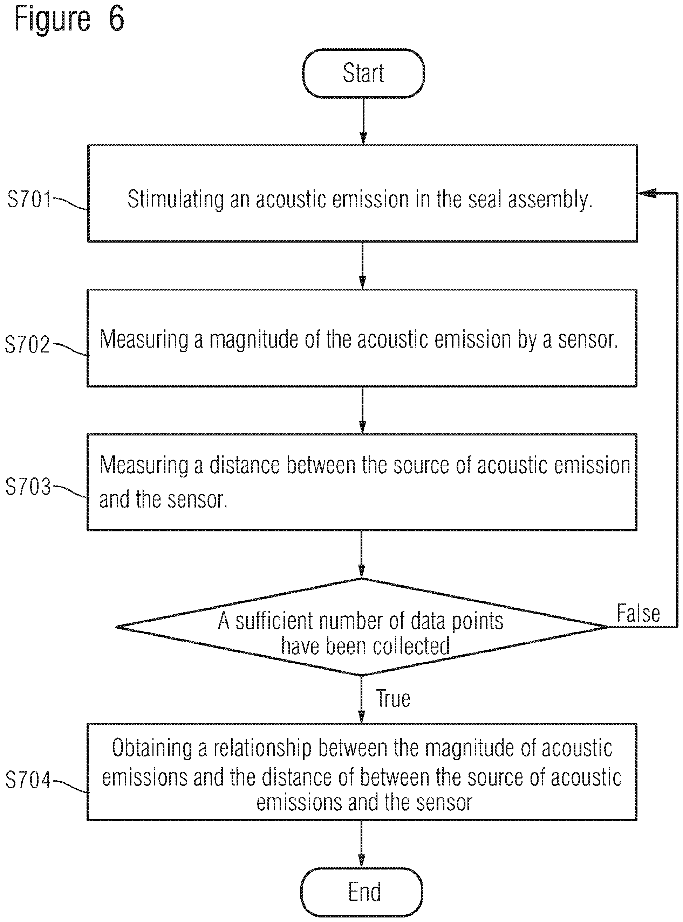

The attenuation function may be obtained empirically. A method of obtaining an attenuation function empirically is shown in Figure 6. The method of empirically obtaining an attenuation function shown in Figure 6 comprises: Simulate, S701, an acoustic emission in the seal assembly.

Simulation of AE may be performed by snapping a pencil lead break on an exterior surface of the seal assembly. For example, a pencil lead break may be snapped at the locations denoted as $S_1$ to $S_7$ in Figure 1.

Measure, S702, a magnitude of the acoustic emission by a sensor.

The sensor may be any sensor described herein suitable for measuring acoustic emissions.

Measure, S703, a distance between the source of acoustic emission and the sensor.

The distance between a source of acoustic emission and the sensor may be measured by, for example, a ruler or a tape measure.

Obtaining a relationship between the magnitude of acoustic emission and the distance between source of AE and the sensor.

Repeat steps S701 through S703 until a sufficient number of data points have been obtained. For example, ten data points may be considered to be a sufficient number of data points in order to perform step S704.

Obtain, S704, a relationship between the magnitude of acoustic emissions and the distance of between the source of acoustic emissions and the sensor.

Certain features of the methods described herein may be implemented in hardware, and one or more functions of the apparatus may be implemented **in** method steps. It will also be appreciated in the context of the present disclosure that the methods described herein need not be performed in the order in which they are described, nor necessarily in the order in which they are depicted in the drawings. Accordingly, aspects of the disclosure which are described with reference to products or apparatus are also intended to be implemented as methods and vice versa. The methods described and/or claimed herein may be implemented in computer programs, or in hardware or in any combination thereof. Computer programs include software, middleware, firmware, and any combination thereof. Such programs may be provided as signals or network messages and may be recorded on computer readable media such as tangible computer readable media which may store the computer programs in non-transitory form. Hardware includes computers, handheld devices, programmable processors, general purpose processors, application specific integrated circuits (ASICs), field programmable gate arrays (FPGAs), and arrays of logic gates.

Any processors used in the computer system (and any of the activities and apparatus outlined herein) may be implemented with fixed logic such as assemblies of logic gates or programmable logic such as software and/or computer program instructions executed by a processor. The computer system may comprise a central processing unit (CPU) and associated memory, connected to a graphics processing unit (GPU) and its associated memory. Other kinds of programmable logic include programmable processors, programmable digital logic (e.g., a field programmable gate array (FPGA), a tensor processing unit (TPU), an erasable programmable read only memory (EPROM), an electrically erasable programmable read only memory (EEPROM), an application specific integrated circuit (ASIC), or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Such data storage media may also provide the data store of the computer system (and any of the apparatus outlined herein).

Other examples and variations of the disclosure will be apparent to the skilled addressee in the context of the present disclosure without departing from the scope of the appended claims.

The condition monitoring system may be configured to perform any of the methods described herein. For example, the condition monitoring system may comprise a controller. The controller may be configured to perform any of the methods described herein.

**Claims**

1.  A computer implemented method of determining when to replace a seal component of a seal assembly, the method comprising:

    obtaining (S301) an indication of an accumulation of acoustic emission energy emitted from the seal component over a period of time, wherein the indication is obtained by a sensor for sensing the acoustic emission energy emitted from the source of the acoustic emission energy;
    determining (S303) an estimate of remaining lifetime of the seal component based on the indication; and, either:

    modifying (S302) the indication by an attenuation function, wherein the attenuation function has a value which depends on the distance of the sensor from a source of acoustic emission energy; or,
    modifying the baseline acoustic emission energy by an attenuation function, wherein the attenuation function has a value which depends on the distance of the sensor from a source of acoustic emission energy.

2.  The method of claim 1, wherein:
    the determining an estimate of remaining lifetime of the seal component is further based on a baseline acoustic emission energy.

3.  The method of claim 2, wherein:
    the determining an estimate of remaining lifetime of the seal component is further based on a comparison between the indication and the baseline acoustic emission energy.

4.  The method of claim 1, wherein:
    the value of the attenuation function varies exponentially with distance of the sensor from the source of acoustic emission energy.

5.  The method of any preceding claim, wherein:
    the determining an estimate of remaining lifetime of the seal component based on the indication comprises:

    squaring the indication to obtain a squared indication;
    determining a total acoustic emission energy emitted from the source of acoustic emission energy over the period of time based on the squared indication.

6.  The method of any preceding claim, wherein:
    the determining an estimate of remaining lifetime of the seal component is further based on a rate of change of the acoustic emission energy over a period of time.

7.  The method of any preceding claim, wherein:
    the determining an estimate of remaining lifetime of the seal component is further based on the indication being independent of temperature of the sensor.

8.  The method of any of claims 1 to 7, comprising:
    replacing the seal component once the estimate of remaining lifetime has elapsed.

9.  A controller configured to perform the method of any of claims 1 to 8.

10. A system comprising:

    a sensor for attachment with a seal assembly and configured to measure an indication of acoustic emission energy emitted from the seal assembly when the seal assembly is in use; and,
    the controller of claim 9.

11. An apparatus comprising:

    a seal assembly (100A, 100B);
    a sensor attached to the seal assembly and configured to measure an indication of acoustic emission energy emitted from the seal assembly when the seal assembly is in use; and,

the controller of claim 9.

**Patentansprüche**

1. Ein computerimplementiertes Verfahren zum Bestimmen, wann eine Dichtungskomponente einer Dichtungsanordnung zu wechseln ist, wobei das Verfahren Folgendes umfasst:

   Erhalten (S301) einer Angabe einer Akkumulation akustischer Emissionsenergie, die von der Dichtungskomponente über einen Zeitraum emittiert wird, wobei die Angabe durch einen Sensor zum Sensieren der akustischen Emissionsenergie, die von der Quelle der akustischen Emissionsenergie emittiert wird, erhalten wird;
   Bestimmen (S303) einer Schätzung der verbleibenden Lebensdauer der Dichtungskomponente basierend auf der Angabe; und entweder:

   Modifizieren (S302) der Angabe durch eine Schwächungsfunktion, wobei die Schwächungsfunktion einen Wert aufweist, der von der Distanz des Sensors von einer Quelle akustischer Emissionsenergie abhängt; oder,
   Modifizieren der akustischen Baseline-Emissionsenergie durch eine Schwächungsfunktion, wobei die Schwächungsfunktion einen Wert aufweist, der von der Distanz des Sensors von einer Quelle akustischer Emissionsenergie abhängt.

2. Verfahren nach Anspruch 1, wobei:
   das Bestimmen einer Schätzung der verbleibenden Lebensdauer der Dichtungskomponente ferner auf einer akustischen Baseline-Emissionsenergie basiert.

3. Verfahren nach Anspruch 2, wobei:
   das Bestimmen einer Schätzung der verbleibenden Lebensdauer der Dichtungskomponente ferner auf einem Vergleich zwischen der Angabe und der akustischen Baseline-Emissionsenergie basiert.

4. Verfahren nach Anspruch 1, wobei:
   der Wert der Schwächungsfunktion exponentiell mit der Distanz des Sensors von der Quelle akustischer Emissionsenergie variiert.

5. Verfahren nach einem vorhergehenden Anspruch, wobei:
   das Bestimmen einer Schätzung der verbleibenden Lebensdauer der Dichtungskomponente basierend auf der Angabe Folgendes umfasst:

   Quadrieren der Angabe, um eine quadrierte Angabe zu erhalten;
   Bestimmen einer akustischen

   Gesamtemissionsenergie, die von der Quelle akustischer Emissionsenergie über den Zeitraum emittiert wird, basierend auf der quadrierten Angabe.

6. Verfahren nach einem vorhergehenden Anspruch, wobei:
   das Bestimmen einer Schätzung der verbleibenden Lebensdauer der Dichtungskomponente ferner auf einer Änderungsrate der akustischen Baseline-Emissionsenergie über einen Zeitraum basiert.

7. Verfahren nach einem vorhergehenden Anspruch, wobei:
   das Bestimmen einer Schätzung der verbleibenden Lebensdauer der Dichtungskomponente ferner darauf basiert, dass die Anzeige unabhängig von der Temperatur des Sensors ist.

8. Verfahren nach einem der Ansprüche 1 bis 7, das Folgendes umfasst:
   Wechseln der Dichtungskomponente, sobald die Schätzung der verbleibenden Lebensdauer verstrichen ist.

9. Eine Steuereinheit, die dazu konfiguriert ist, das Verfahren nach einem der Ansprüche 1 bis 8 durchzuführen.

10. Ein System, das Folgendes umfasst:

einen Sensor zum Anbringen an einer Dichtungsanordnung und dazu konfiguriert, eine Anzeige akustischer Emissionsenergie, die von der Dichtungsanordnung emittiert wird, zu messen, wenn die Dichtungsanordnung in Verwendung ist; und,
die Steuereinheit nach Anspruch 9.

11. Eine Vorrichtung, die Folgendes umfasst:

eine Dichtungsanordnung (100A, 100B);
einen Sensor, der an der Dichtungsanordnung angebracht ist und dazu konfiguriert ist, eine Anzeige akustischer Emissionsenergie, die von der Dichtungsanordnung emittiert wird, zu messen, wenn die Dichtungsanordnung in Verwendung ist; und,
die Steuereinheit nach Anspruch 9.

**Revendications**

1. Procédé mis en œuvre par ordinateur permettant de déterminer quand remplacer un composant d'étanchéité d'un ensemble d'étanchéité, le procédé comprenant :

l'obtention (S301) d'une indication d'une accumulation d'énergie d'émission acoustique émise par le composant d'étanchéité sur une période de temps, dans lequel l'indication est obtenue par un capteur permettant de détecter l'énergie d'émission acoustique émise par la source d'énergie d'émission acoustique ;
la détermination (S303) d'une estimation de la durée de vie restante du composant d'étanchéité sur la base de l'indication ; et, soit :

la modification (S302) de l'indication par une fonction d'atténuation, dans lequel la fonction d'atténuation a une valeur qui dépend de la distance du capteur par rapport à une source d'énergie d'émission acoustique ; soit,
la modification de l'énergie d'émission acoustique de référence par une fonction d'atténuation, dans lequel la fonction d'atténuation a une valeur qui dépend de la distance du capteur par rapport à une source d'énergie d'émission acoustique.

2. Procédé selon la revendication 1, dans lequel :
la détermination d'une estimation de la durée de vie restante du composant d'étanchéité est en outre basée sur une énergie d'émission acoustique de référence.

3. Procédé selon la revendication 2, dans lequel :
la détermination d'une estimation de la durée de vie restante du composant d'étanchéité est en outre basée sur une comparaison entre l'indication et l'énergie d'émission acoustique de référence.

4. Procédé selon la revendication 1, dans lequel :
la valeur de la fonction d'atténuation varie de façon exponentielle avec la distance du capteur par rapport à la source d'énergie d'émission acoustique.

5. Procédé selon l'une quelconque revendication précédente, dans lequel :
la détermination d'une estimation de la durée de vie restante du composant d'étanchéité sur la base de l'indication comprend :

l'élévation au carré de l'indication pour obtenir une indication au carré ;
la détermination d'une énergie d'émission acoustique totale émise par la source d'énergie d'émission acoustique au cours de la période de temps sur la base de l'indication au carré.

6. Procédé selon l'une quelconque revendication précédente, dans lequel :
la détermination d'une estimation de la durée de vie restante du composant d'étanchéité est en outre basée sur un taux de variation de l'énergie d'émission acoustique sur une période de temps.

7. Procédé selon l'une quelconque revendication précédente, dans lequel :
la détermination d'une estimation de la durée de vie restante du composant d'étanchéité est en outre basée sur le fait que l'indication est indépendante de la température du capteur.

8. Procédé selon l'une quelconque des revendications 1 à 7, comprenant :
   le remplacement du composant d'étanchéité une fois que la durée de vie restante estimée s'est écoulée.

9. Contrôleur configuré pour effectuer le procédé selon l'une quelconque des revendications 1 à 8.

10. Système comprenant :

    un capteur destiné à être relié à un ensemble d'étanchéité et configuré pour mesurer une indication d'énergie d'émission acoustique émise par l'ensemble d'étanchéité lorsque celui-ci est en cours d'utilisation ; et,
    le contrôleur selon la revendication 9.

11. Appareil comprenant :

    un ensemble d'étanchéité (100A, 100B) ;
    un capteur relié à l'ensemble d'étanchéité et configuré pour mesurer une indication d'énergie d'émission acoustique émise par l'ensemble d'étanchéité lorsque celui-ci est en cours d'utilisation ; et,
    le contrôleur selon la revendication 9.

## Figure 1A

## Figure 1B

# Figure 2

Start

S201 — obtaining an indication of a sum of acoustic emission energy emitted from the component over a period of time

S202 — determining an estimate of remaining lifetime of the component based on the indication

End

# Figure 3

```
                          ┌─────────┐
                          │  Start  │
                          └─────────┘
                               │
                               ▼
        ┌──────────────────────────────────────────────────┐
        │  obtaining, by a sensor for sensing the acoustic  │
        │  emission energy emitted from the source of the   │
  S301  │  acoustic emission energy, an indication of a sum │
        │  of acoustic emission energy emitted from the     │
        │  component over a period of time                  │
        └──────────────────────────────────────────────────┘
                               │
                               ▼
        ┌──────────────────────────────────────────────────┐
  S302  │     modifying the indication by an attenuation    │
        │                    function                       │
        └──────────────────────────────────────────────────┘
                               │
                               ▼
        ┌──────────────────────────────────────────────────┐
        │  determining an estimate of remaining lifetime of │
  S303  │  the component based on: the indication; and, a   │
        │         baseline acoustic emission energy         │
        └──────────────────────────────────────────────────┘
                               │
                               ▼
        ┌──────────────────────────────────────────────────┐
        │  replacing the component once the estimate of     │
  S304  │          remaining lifetime has elapsed           │
        └──────────────────────────────────────────────────┘
                               │
                               ▼
                          ┌─────────┐
                          │   End   │
                          └─────────┘
```

Figure 4

## Figure 5A

## Figure 5B

# Figure 6

Start

S701 — Stimulating an acoustic emission in the seal assembly.

S702 — Measuring a magnitude of the acoustic emission by a sensor.

S703 — Measuring a distance between the source of acoustic emission and the sensor.

A sufficient number of data points have been collected — False

True

S704 — Obtaining a relationship between the magnitude of acoustic emissions and the distance of between the source of acoustic emissions and the sensor

End

**EP 4 189 355 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020141907 A
- US 2010106429 A
- DE 102016205454